# EUROPEAN PATENT SPECIFICATION

(11) **EP 2 721 205 B1**
(45) Date of publication and mention of the grant of the patent: **14.08.2019**
(21) Application number: 12725819.2
(22) Date of filing: 06.06.2012
(51) Int. Cl.: D03D 47/30, G05D 16/16

(54) **AIR SUPPLY SYSTEM FOR AN AIRJET WEAVING MACHINE**
LUFTZUFUHRSYSTEM FÜR EINE LUFTDÜSENWEBMASCHINE
SYSTÈME D'APPROVISIONNEMENT EN AIR POUR UNE MACHINE À TISSER À JET D'AIR

(30) Priority: 15.06.2011 BE 201100354; 15.06.2011 BE 201100355; 15.06.2011 BE 201100356
(43) Date of publication of application: 23.04.2014
(73) Proprietor: Picanol, 8900 Ieper (BE)
(72) Inventor: PEETERS, Jozef, B-8900 Ieper (BE)
(74) Representative: Patentanwälte Ruff, Wilhelm, Beier, Dauster & Partner mbB
(86) International application number: PCT/EP2012/060726
(87) International publication number: WO 2012/171841

(56) References cited:
- EP-A2- 0 112 145
- DE-A1- 2 701 038
- JP-A- H0 382 848
- JP-B- 7 100 898
- US-A- 4 653 523

## Description

### Technical Field

The invention relates to a pressure regulator device for an air supply system for an airjet weaving machine. The invention further relates to an air supply system for supplying compressed air to a blowing device of an airjet weaving machine, wherein a pressure regulator device is arranged downstream of a compressed air source.

### Prior Art

In airjet weaving machines, it is known to regulate the flow of compressed air coming from a compressed air source, such as a compressor or an airtank, and supplied to a blowing device for inserting a weft thread using a pressure regulator to match the actual flow of compressed air to the demand for compressed air. The actual flow of compressed air is regulated by the pressure regulator in such way, that an output pressure of the pressure regulator is kept substantially constant in order to achieve a reliable weft thread insertion within the time interval that a weaving shed, formed by warp threads, is open. Generally, the output pressure is regulated so that the inserted weft thread arrives at the opposite side of the shed before the shed closes. In particular, the output pressure is regulated so that the weft thread moves with a sufficient speed in order to arrive at the opposite side of the shed and to arrive on the expected arrival moment. The output pressure can be set in advance, for example depending on the kind of weft thread to be inserted, or can be adapted during weaving, for example depending on the moment of arrival of weft threads at the opposite side of the shed.

An air supply system for supplying compressed air to a blowing device of an airjet weaving machine is known for example from US 5,970,996. According to US 5,970,996 two main blowing devices are each connected by a first branch to a compressed-air source feeding high-pressure compressed air for purposes of a weft thread insertion, wherein compressed air coming from the compressed-air source is fed via a pressure regulator to a buffer airtank.

JP 2931080 B2 describes a pressure regulator device for weaving machines arranged between a main tank and a buffer airtank arranged downstream of the main tank, wherein the pressure regulator device comprises a motor controlled pressure regulator having a diaphragm actuator with a diaphragm loaded by a pressure regulating spring. A force of the pressure regulating spring is set using a motor. For adjusting an output pressure the setting of the pressure regulating spring is adapted. In order to compensate the influences due to the compressed airflow through the pressure regulator on the output pressure of the pressure regulator at a setting of the pressure regulating spring, a feed-back control using pressure sensors is provided, wherein the pressure sensors measure the pressure at the buffer airtank arranged downstream of the outlet of the pressure regulator and wherein the setting of the pressure regulating spring is adjusted accordingly in order to obtain the desired output pressure.

From technical fields not analogous to the technical field of the invention, the use of pilot controlled pressure regulators is known. For example, DE 38 39 146 A1 discloses a pilot controlled gas pressure regulator to be used in air conditioning systems. The pilot controlled gas pressure regulator comprises a diaphragm actuator loaded by a pilot pressure. A return spring is provided for keeping a valve opening closed in idle times with no gas flow through the gas pressure regulator. The pilot pressure is balanced by an output pressure and the return force of the return spring. Hence, the output pressure is always below the pilot pressure.

US 4,653,523 shows a fluid amplifier, which is used in a pneumatic transducer to provide an output pressure in response to a pilot pressure provided as a function of a current signal. The fluid amplifier includes a pressure chamber connected to an outlet duct with an inlet port and an exhaust passageway. In the pressure chamber a valve is provided that opens a pressure source to the inlet port and also controls pressure feeding through the exhaust passageway. The amplifier valve is provided with a negative feedback arrangement using the exhaust back pressure to stabilize the operation.

JP 7-100898 B2 discloses the use of a pilot pressure regulator in an air supply system for a weaving machine. The pilot controlled pressure regulator comprises a bypass at an inlet and a diaphragm actuator that is loaded by a feed pressure, which feed pressure is balanced by an output pressure. In weaving machines the feed pressure can however vary within limits. Such variations in the feed pressure can lead to a disturbance of the pilot pressure regulator.

EP 0 112 145 A2 discloses a weft transfer control system for controlling the supply pressure to a nozzle of an airjet weaving machine comprising a pilot controlled pressure regulator, wherein the supply pressure inside a tank is adjusted by connecting the tank to a pressured air source via the regulator. The control pressure or pilot pressure of the pilot controlled pressure regulator is set using an electromagnetic air pressure valve, which electromagnetic air pressure valve is receiving a predetermined control signal from a control box.

### Summary of the Invention

It is the object of the invention to provide a pilot controlled pressure regulator, in particular a pilot controlled pressure regulator for an air supply system for an airjet weaving machine, which is small in size, allows high output pressures and is insensitive for pressure changes in the feed pressure. It is further the object of the invention, to provide an air supply system for an airjet weaving machine comprising a pilot controlled pressure regulator.

This object is solved by a pilot controlled pressure regulator for an air supply system for an airjet weaving machine and the air supply system for an airjet weaving machine with the features of claims 1 and 14. Preferred embodiments are defined in the dependent claims.

It is the basic idea of the invention to provide a pressure regulating device comprising a pilot controlled pressure regulator having an actuator and a valve element arranged for reciprocal movement by the actuator, wherein the actuator is loaded by a load of a pilot pressure exerted against a load of an output pressure, the device further comprises a setting device for setting a pilot pressure and a force enlarging device for enlarging the load exerted by the set pilot pressure on the actuator and for regulating the output pressure to values higher than the values of the set pilot pressure.

The actuator is a diaphragm actuator comprising a first diaphragm loaded by the pilot pressure and at least one second diaphragm loaded by the pilot pressure.

Herein the value of the output pressure of the pilot controlled pressure regulator can be equal to the value of the feed pressure of the pilot controlled pressure regulator. The pilot controlled pressure regulator is in the context of this invention also named pilot controlled first pressure regulator.

In a pilot controlled pressure regulator, a valve element is arranged for reciprocal movement by the actuator, which actuator is loaded by a load by the control pressure, also referred to as the pilot pressure, against the load by the output pressure. In the context of this invention the term "feed pressure" is defined as the pressure prevailing in a feed duct to the pressure regulator and the term "output pressure" is defined as the pressure prevailing at an outlet of the pressure regulator. The term "load" means in the context of this invention a force exerted due to a pressure. The load generally depends of the effective surface on which the pressure acts.

The force enlarging device enlarges the load exerted by the pilot pressure. The output pressure of the pilot controlled pressure regulator can be regulated to any desired value that is lower or equal to the feed pressure of the pilot controlled pressure regulator.

Further, the output pressure of the pressure regulator remains essentially constant for a chosen or set pilot pressure, irrespective of the actual airflow through the pilot controlled pressure regulator. The setting of the pilot pressure is in an embodiment done by means of a motor controlled second pressure regulator, wherein the feed pressure, which is the pressure with which air is fed from a compressed air source to the weaving machine, is brought to the desired pilot pressure with amongst others the motor controlled second pressure regulator. Further, a force element, for example a spring may be provided for keeping the pressure regulator closed in case no airflow flows through the pressure regulator or no pilot pressure is applied. The force of the force element may be chosen small and suspensions may be kept to a minimum in order to avoid non-linearities, so that forces applied by the spring are substantially constant. In case of an increased airflow, in other words an increased demand of air, an output pressure at the outlet of the pressure regulator decreases, in response to which the valve element is moved until the output pressure at the outlet of the pressure regulator reaches again a desired value. As in contrast to pressure regulators which are set using a pressure regulating spring, in which a movement of the valve element corresponds to a change in length of the pressure regulating spring and results in a changed force exerted by the pressure regulating spring, the moving of the valve element of a pilot-controlled pressure regulator does not influence the load by the control pressure or pilot pressure. Therefore, an output pressure at the outlet of the pressure regulator is essentially independent from the quantity of air flowing through the pressure regulator. This is very advantageous in weaving machines, in particular in case of the changing of the airflow through the pressure regulator due to changes in control times of valves or transitions between periods wherein valves are or not controlled, for example transitions between periods wherein weft thread is inserted and periods wherein no weft thread is inserted. Further, a regulation of the airflow through the pressure regulator is independent of a regulation of the set pilot pressure. This allows to weave at any speed and with any weft insertion pattern for weft threads.

According to the invention, the actuator is loaded by the pilot pressure enlarged by the force enlarging device. Therefore, an output pressure, which is dependent on the resulting load applied on the actuator, is increased. This means that the output pressure is higher than the pilot pressure, in other words the pilot pressure is lower than the output pressure. As a consequence, the pilot pressure, which is chosen lower than the desired output pressure, is also lower than the feed pressure or the pressure with which air is fed from a compressed air source to the pressure regulator, since the feed pressure is at least as high as the output pressure. In case of the lower pilot pressure, at any feed pressure the output pressure of the pilot controlled first pressure regulator can become equal to the feed pressure of the pilot controlled first pressure regulator. Also in this case with the aid of the low pilot pressure, the valve element can always be brought in fully open position at any feed pressure.

In weaving mills the pressure fed to the weaving machines may vary in time, for example due to pressure variations within limits at a compressor used as a compressed air source caused by an ON/OFF control of the compressor, due to changes in the number of active compressors, in cases that several compressors are used in parallel as compressed air source, due to pressure losses in distribution ducts that are dependent on an airflow there through, due to changes in the number of active weaving machines, for example caused by weaving machines that have been stopped because of an error or for another reason, such as maintenance, due to electric voltage changes in an electric feed line to the compressor, due to airfilters that become dirty resulting in a lower airflow there through, or due to other reasons. For example, in a weaving mill variations in the feed pressure between 5,8 bar and 5,3 bar may occur. In order to avoid that pressure variations in the feed pressure result in a variation of the pilot pressure and therefore in a variation of the output pressure, in preferred embodiments the pilot pressure is chosen lower than the minimum expected feed pressure, for example set to a pressure between 2,5 bar and 3,5 bar. By applying a force enlarging device a load by the pilot pressure on the actuator is enlarged, so that a desired output pressure in an embodiment can be set to essentially match to an average feed pressure, while the pilot pressure can be chosen lower than the minimal value of the feed pressure which may arise due to pressure variations.

The diaphragm actuator is loaded by the load applied by the pilot pressure and enlarged by the force enlarging device and the load applied by the output pressure. The valve element is moved in response to a load difference between the resulting load applied by the pilot pressure and the load applied by the output pressure for increasing or decreasing a valve opening in order to adjust the output pressure of the pressure regulator in dependence of the set pilot pressure. In the context of this invention the term "diaphragm" means a dividing element forming a moveable dividing wall for compressed air between two chambers. In the context of this invention the "diaphragm" can consist of a dividing wall in the form of a bellows-like element, a plate-like element or any other suchlike element.

According to the invention, at least one second diaphragm loaded by the pilot pressure is provided, wherein the load on the at least one second diaphragm is applied to the first diaphragm, and the resulting load on the first diaphragm is balanced by the output pressure. The pilot pressure is supplied to all diaphragms, for example both the first diaphragm and the second diaphragm. Thereby, the surface on which the pilot pressure acts is increased. The output pressure acts only on the first diaphragm. In case all surfaces are essentially of the same size, the resulting surface on which the pilot pressure acts is substantially multiple, e.g. double of the surface of the first diaphragm on which the output pressure acts. This allows to provide a compact pilot controlled first pressure regulator.

According to preferred embodiments, the pressure regulator device comprises at least a first pressure chamber set under pilot pressure, the at least one first pressure chamber having an opening that allows a leak air flow from the first pressure chamber to the environment. In use, the first pressure chamber is set under pilot pressure. The opening allows a small leak air flow from the first pressure chamber to the environment. For this purpose, the first pressure chamber in one embodiment is communicated with the environment directly via the opening. In other embodiments, the opening leads to one or more further chambers and from this chamber or these chambers via further openings to the environment. In case pilot pressure is fed to the first pressure chamber, this small leak air flow is advantageous to avoid a hysteresis when a change of pilot pressure is required. This ensures a fast pressure control. In case no pilot pressure is fed to the first pressure chamber, for example in idle times, the pressure in the first pressure chamber will eventually equal the environment pressure.

According to preferred embodiments, the first pressure chamber is delimited by the first diaphragm.

According to one embodiment, at least one second pressure chamber set under pilot pressure and delimited by the at least one second diaphragm is provided, which is connected to the first pressure chamber delimited by the first diaphragm, for example via an intermediate chamber. In one embodiment, the pressure chambers are stacked, for example with an intermediate chamber in between. Of course, more than two diaphragms with a corresponding pressure chamber for pilot pressure may be provided in a stacked arrangement, and for example corresponding intermediate chambers between adjacent pressure chambers for pilot pressure. A stacked arrangement of pressure chambers and/or diaphragms is advantageous because in this way a compact pilot controlled pressure regulator is achieved, in particular a stacked arrangement allows to simply arrange multiple pilot controlled pressure regulators next to one another in a small space.

Preferably, the intermediate chamber communicates with the environment. As a consequence, the environmental pressure prevails in the intermediate chamber. To this end, the intermediate chamber may be provided with a sufficiently large opening to the environment.

According to a preferred embodiment, the intermediate chamber is delimited by the second diaphragm and a cover, which cover also delimits the first pressure chamber.

According to another embodiment, the first diaphragm and the second diaphragm are coupled for a force transmission via a rod. The rod mutually connects the two diaphragms for a transmission of the load on the second diaphragm to the first diaphragm, wherein a relative movement of the diaphragms is not necessarily given. The effective surface of the first diaphragm is decreased by the area on which the rod acts. However, the decrease is generally negligible.

In another embodiment, the cover delimiting the first pressure chamber is provided with a through opening for the rod, wherein the rod moves in the through opening with play. Between the rod and the through opening a sealing ring may be provided. Preferably, the first pressure chamber and the intermediate chamber communicate via an opening provided therefore. When the intermediate chamber communicates with the environment, this opening is sufficient for obtaining a small leak air flow from the first pressure chamber to the environment, for example via the intermediate chamber and from the intermediate chamber via the opening of the intermediate chamber to the environment. In case pilot pressure is fed to the first pressure chamber, this small leak air flow is advantageous as described above to avoid a hysteresis when a change of pilot pressure is required. Thereby, a fast pressure control is ensured. In other embodiments, in addition or as alternative the function of the opening between the first pressure chamber and the intermediate chamber, and therefore the first pressure chamber and the environment, is achieved by the through opening for the rod, if the rod can move with an appropriate play through the cover.

The rod comprises for example an air duct, for example a substantially axial air duct that allows that compressed air flows between the first pressure chamber and the second pressure chamber. This offers the advantage that the pilot pressure can be supplied either to the first pressure chamber as to the second pressure chamber and that compressed air can flow between the pressure chamber and the second pressure chamber.

According to another embodiment, a force element such as a spring acts on the valve element in opposition to the pilot pressure. The force element ensures that the pressure regulator is closed when no pressure is present, in particular the pressure regulator is closed when no pilot pressure is present or when no flow is supplied or demanded. Applying a force enlarging device allows to set an output pressure which is as high as the feed pressure, so that the feed pressure can be used fully for inserting weft threads. In this case the combined load by the output pressure and by the force element on the valve element is balanced by the load by to the pilot pressure, enlarged by the force enlarging device. Due to the low pilot pressure the pilot pressure can always be increased in order to bring the valve element of the pressure regulator in fully opened position at any value of the output pressure.

A diaphragm of the diaphragm actuator may for example as well be formed by a diaphragm formed as a membrane, for example a bellows-like membrane of which the edges are clamped, as by a diaphragm formed as a disc. In case of a disc, at the edges of the disc a sealing may be provided and the disc may for example move together with the seal in a housing, more in particular shift in a housing.

According to another embodiment at least one pressure sensor is provided upstream of the first pressure regulator to measure a feed pressure of the compressed air source, wherein an open-loop control unit is provided which is arranged to control or adapt a control variable, for example the pilot pressure of the first pressure regulator, for example as a function of the measured feed pressure.

By fitting a pressure sensor for measuring the pressure in the feed duct upstream of the pressure regulator, the pressure regulator may be adapted when the feed pressure changes or when the feed pressure drops below a boundary value for pressure which is for example related to a desired output pressure of the pressure regulator.

In particular, according to the preferred embodiment, it is avoided that the late arrival due to a drop in the feed pressure leads to a control which results in an unrealisable increase of the desired output pressure or at least such an increase is kept small. Therefore, when the feed pressure subsequently increases, the desired output pressure at the pressure regulator still almost matches the weaving conditions.

The advantages are a simple control device and method, in particular when the feed pressure of the compressed air source drops to a value lower than a desired value for the output pressure, this for example means a desired pressure in a buffer airtank.

According to a preferred embodiment, further an apparatus is provided for determining an airflow through the pressure regulator, wherein the open-loop control unit is arranged for controlling the control variable of the pressure regulator as a function of the measured feed pressure and the defined airflow. In case of an increased airflow, an output pressure at the outlet of the first pressure regulator decreases, in reaction to which the valve element of the first pressure regulator is moved until the output pressure at the outlet of the first pressure regulator reaches a desired value again. By taking into account the airflow through the pressure regulator with a device for determining an airflow, every undesired decrease of an output pressure due to an increased airflow or an extra pressure drop downstream of the pressure regulator can be avoided or compensated.

In accordance with other embodiments, the apparatus for determining an airflow through the first pressure regulator comprises a calculation unit for calculating the airflow in function of measured parameters, in particular in function of the opening times of the valve systems to the blowing devices, of the pressure fed to the blowing devices, of the kind of nozzles of the blowing devices and of the number of blowing devices that are used. For each blowing device, a value for an airflow can be determined approximate in advance, for example based on previous measurements or based on formulae of airflow dynamics. The total airflow can be calculated based on these values.

According to a preferred embodiment, the force enlarging device is at least partially an integral component of the actuator. In other words the force enlarging device and the actuator have at least one common component. This allows to minimize the size of the pilot controlled pressure regulating device.

The object is also solved by an air supply system for an airjet weaving machine comprising at least one blowing device and a compressed air source, wherein compressed air from the compressed air source is supplied via the air supply system to the at least one blowing device, wherein the air supply system comprises at least one pilot controlled pressure regulator arranged between the compressed air source and a buffer airtank, the at least one pilot controlled pressure regulator is arranged for regulating the pressure in the buffer airtank, which buffer airtank is arranged between the at least one pilot controlled pressure regulator and the blowing device.

In preferred embodiments, a group of pilot controlled pressure regulators are provided, which are arranged adjacent to each other. The pilot controlled pressure regulators may be at least partially formed as integral components. An arrangement of the pilot controlled pressure regulators according to the invention next to one another allows an arrangement that is small in size. Further, the length of supply ducts and losses in the supply ducts may be reduced due to the small sized pilot controlled pressure regulators according to the invention.

### Brief Description of the Drawings

In the following, embodiments of the invention will be described in detail based on several schematic drawings. Throughout the drawings, the same or similar elements will be denoted by the same reference numerals.
- Fig. 1: is a schematic view of an air supply system for an airjet weaving machine comprising a pilot controlled first pressure regulator, a motor controlled second pressure regulator and a manually adjustable third pressure regulator;
- Fig. 2: is a schematic view of a cross section of an embodiment of a pilot controlled first pressure regulator;
- Fig. 3: is a schematic view of a cross section of a variant of the pilot controlled first pressure regulator from fig. 2;
- Fig. 4: is a schematic view of a cross section of yet a further variant not covered by the claims of the pilot controlled first pressure regulator from fig. 2;
- Fig. 5: is a schematic view of a cross section of a motor controlled second pressure regulator;
- Fig. 6: is a schematic view of a cross section of a variant of the motor controlled second pressure regulator from fig. 5;
- Fig. 7: is a schematic view of a cross section of an embodiment of a pilot controlled first pressure regulator into which a motor controlled second pressure regulator is integrated;
- Fig. 8: is a schematic view of a cross section of yet a further variant not covered by the claims of the pilot controlled first pressure regulator of fig. 2;
- Fig. 9: is a schematic view of a cross section of a variant not covered by the claims of the pilot controlled first pressure regulator from fig. 8;
- Fig. 10: is a schematic view of an open-loop control of an air supply system, and;
- Fig. 11: is a schematic view of an air supply system according to the invention for an airjet weaving machine.

### Detailed Description of Preferred Embodiments

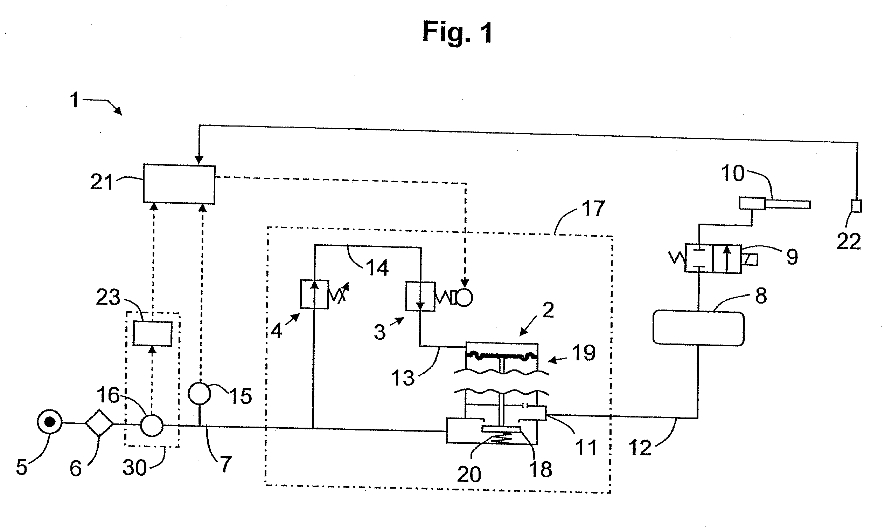

Fig. 1 shows a schematic view of an air supply system 1 for an airjet weaving machine comprising a first pressure regulator 2, a second pressure regulator 3 and a third pressure regulator 4, in particular a pilot controlled first pressure regulator 2, a motor controlled second pressure regulator 3 and a manually adjustable third pressure regulator 4. The air supply system 1 is intended for supplying compressed air from a compressed air source 5 via an air filter 6, a feed line 7, the first pressure regulator 2, a buffer airtank 8 and a valve system 9 to a blowing device 10. The pilot controlled first pressure regulator 2 is provided upstream of the buffer airtank 8 and is intended for regulating an airflow through the pressure regulator 2 so that air with a desired output pressure is supplied via a duct 12 from the outlet 11 of the pressure regulator 2 to the buffer airtank 8. The first pressure regulator 2 is arranged between the compressed air source 5 and the buffer airtank 8 and is intended for regulating the pressure in the buffer airtank 8. The buffer airtank 8 is arranged between the first pressure regulator 2 and the blowing device 10.

The first pressure regulator 2, in particular the pilot controlled first pressure regulator 2, is regulated by a pilot pressure supplied to the first pressure regulator 2. The pilot pressure for the first pressure regulator 2 is regulated using the second pressure regulator 3, in particular the motor controlled second pressure regulator 3, in order to supply compressed air at a pilot pressure via a duct 13 to the first pressure regulator 2. To the second pressure regulator 3 compressed air is fed via the third pressure regulator 4, in particular the manually adjustable third pressure regulator 4, and a duct 14. The air supply system 1 comprises a pressure sensor 15 arranged upstream of the first pressure regulator 2 for measuring a feed pressure in the feed line 7 between the compressed air source 5 and the first pressure regulator 2. The pressure sensor 15 is also arranged upstream of the second pressure regulator 3 and of the third pressure regulator 4. Further, the air supply system 1 comprises an apparatus 30 for determining an airflow through the first pressure regulator 2, in particular an airflow measuring device 16, which airflow measuring device 16 is arranged upstream of the first pressure regulator 2 in the feed line 7. The airflow measured by the airflow measuring device 16 is mainly defined by the airflow through the first pressure regulator 2, since the airflow through the second pressure regulator 3 and the third pressure regulator 4 is negligibly small. An airflow measuring device is described for example in WO 2010/046092, the content of which is herewith incorporated by reference. According to the invention a pressure regulator device 17 comprises at least the pilot controlled first pressure regulator 2. In the embodiment shown the pressure regulator device 17 comprises the pilot controlled first pressure regulator 2, the motor controlled second pressure regulator 3 and the manually adjustable third pressure regulator 4. The pressure regulator device 17 is arranged downstream of the compressed air source 5.

The first pressure regulator 2 is controlled with a settable pilot pressure as control variable. In a pilot controlled first pressure regulator 2 a valve element 18 is arranged for reciprocal movement by an actuator 19, which actuator 19 is loaded by the load applied by the pilot pressure from the second pressure regulator 3, against the load applied by the output pressure at the outlet 11. Further, a force element 20 such as a spring may be provided for forcing the pressure regulator 2 in closed state, which force element 20 can exert a small and almost constant force. The force element 20 acts in opposition to the pilot pressure on the valve element 18. The force element 20 is intended for keeping the first pressure regulator 2 closed, this means keeping the valve element 18 in closed position when no pilot pressure is applied or when no flow is demanded.

In this pilot controlled first pressure regulator 2 the valve element 18 is forced to an open position by the force exerted by the pilot pressure on the actuator 19 and to a closed position by the force exerted by the output pressure on the actuator 19. By choosing the pilot pressure sufficiently high the valve element 18 can in this case be kept in a full open position. The force element 20 forces in this case the valve element 18 to a closed position, whereby the force exerted by the force element 20 in normal use is substantially smaller than the force exerted by the pilot pressure or the force exerted by the output pressure.

The second pressure regulator 3 is motor controlled and is provided for regulating the settable pilot pressure of the pilot controlled first pressure regulator 2. As will be explained further on, the pilot pressure is preferably chosen lower than a feed pressure of the compressed air source 5 to the pilot controlled first pressure regulator 2. It is known that in weaving mills the feed pressure is normally chosen between 5 bar and 7 bar, for example 5,5 bar, and that the feed pressure may vary randomly over time. In weaving mills, for example, when a feed pressure of 5,5 bar is chosen, random variations in feed pressure between 5,3 bar and 5,8 bar may occur. In order to avoid that pressure variations in the feed pressure result in a variation of the pilot pressure, the pilot pressure is regulated by the second pressure regulator 3 to a pressure lower than the minimum expected feed pressure of the compressed air source 5, in an embodiment to a pressure between 2,5 bar and 3,5 bar.

In fig. 1, also a third pressure regulator 4 is provided for regulating a feed pressure for the second pressure regulator 3. According to an embodiment, the third pressure regulator 4 is a manually adjustable pressure regulator. The feed pressure for the second pressure regulator 3 is in this case set lower than the feed pressure of the compressed air source 5 and set higher than the desired pilot pressure to the first pressure regulator 2, for example set at about 4 bar. In case a motor controlled pressure regulator is used as second pressure regulator 3, such a reduction is also advantageous as due to this the forces on the second pressure regulator 3 are relatively low, and a smaller motor can be used. In other embodiments the third pressure regulator 4 is omitted, so that the feed pressure of the second pressure regulator 3 corresponds to the feed pressure of the compressed air source 5.

In fig. 1 a control unit 21, more particularly an open-loop control unit 21 is shown which is arranged for controlling or regulating a control variable of the first pressure regulator 2, in this embodiment the pilot pressure for the first pressure regulator 2, by controlling the second pressure regulator 3 in dependence of, for example, the measured feed pressure of the compressed air source 5, a determined airflow through the feed line 7, the desired output pressure p_w and/or an insertion parameter such as an arrival moment of a weft thread at a thread detector 22 which, for example, is arranged along an insertion path of the weft thread. In the context of the invention, with an "open-loop control unit" a control unit is meant for controlling the output pressure of a pressure regulator wherein the output pressure of the pressure regulator is not measured and not used as a feedback for controlling the output pressure, but wherein the output pressure however may be controlled in dependence of other parameters than the output pressure, parameters such as for example the abovementioned feed pressure, the desired output pressure, the abovementioned airflow, the abovementioned arrival moment and/or other suchlike parameters. With "open-loop" is so meant that no feedback of the actual output pressure exists, but that the desired value for the output pressure may be regulated based on other parameters. If the blowing device 10 comprises a main blower, the output pressure is adapted to measured parameters for the inserted weft thread, while if the blowing device 10 comprises a relay nozzle, the output pressure is usually kept constant or changed sporadically. The control unit 21 can cooperate with the apparatus 30, in particular with the airflow measuring device 16 of the apparatus 30. Preferably a feedback control of the pressure regulator device 17 based on the output pressure at the outlet 11 or the pressure in the buffer airtank 8 is avoided, so that no pressure sensor has to be provided downstream of the outlet 11 of the first pressure regulator 2, for example at the buffer airtank 8. Further the apparatus 30 comprises instead of or in addition to the airflow measuring device 16, for example, a calculating unit 23 for calculating an airflow through the first pressure regulator 2. According to another possibility, the calculating unit 23 is part of the control unit 21. The calculating unit 23 can calculate the airflow, for example as a sum of values determined in function of parameters such as the opening times of the valve systems 9 to the blowing devices 10, the pressure fed to the blowing devices 10, the kind of nozzles of the blowing devices 10, the number of blowing devices 10 that are used and other parameters. This calculation can be based on previous measurements or on formulae of airflow dynamics.

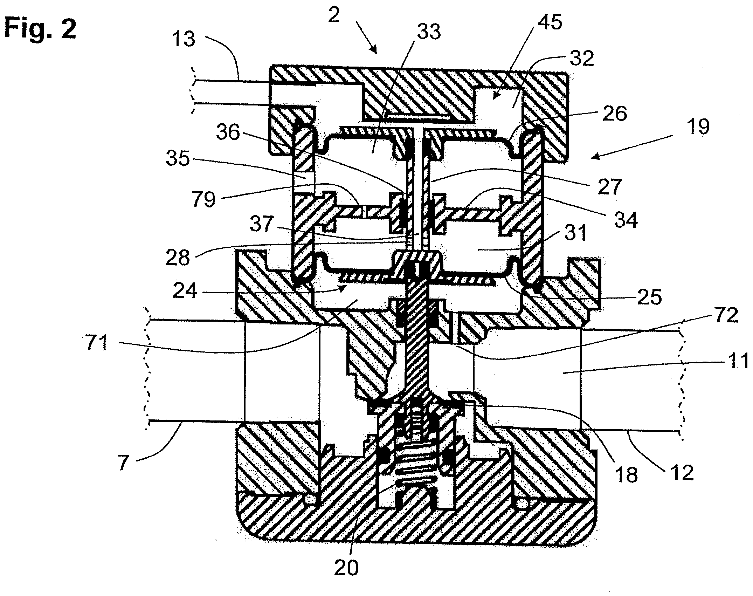

As shown in fig. 2, the actuator 19 of the first pressure regulator 2 is formed by a diaphragm actuator 24 with a first diaphragm 25 loaded at one side by a pilot pressure from the second pressure regulator 3 and at the other side by the output pressure of the first pressure regulator 2. The first pressure regulator 2 further comprises a valve element 18 mounted for reciprocal movement by the actuator 19.

In the embodiment shown in fig. 2 also a second diaphragm 26 loaded by the pilot pressure from the second pressure regulator 3 is provided. The second diaphragm 26 is coupled for force transmission to the first diaphragm 25 by a rod 27, so that the second diaphragm 26 can press on the first diaphragm 25. The load on the second diaphragm 26 is applied to the first diaphragm 25, and the resulting load on the first diaphragm 25 is balanced by the output pressure of the first pressure regulator 2. The output pressure is only in contact with the first diaphragm 25. The effective surface of the first diaphragm 25 on which acts the pilot pressure is somewhat decreased by the rod 27. However this decrease is generally negligible and the effective surface loaded by the pilot pressure is essentially equal to the joint surface of the first and the second diaphragm 25, 26. Therefore the effective surface loaded by the pilot pressure is substantially higher than the effective surface loaded by the output pressure. The output pressure is in this case approximately double of the pilot pressure, for example 1,9 times the pilot pressure. Due to this a compact pilot controlled pressure regulator 2 is obtained.

In this embodiment, a first pressure chamber 31 set under pilot pressure, also referred to as first pressure chamber for pilot pressure, is provided that is delimited by the first diaphragm 25. Further, a second pressure chamber 32 for pilot pressure is provided that is delimited by the second diaphragm 26. The pressure chambers 31 and 32 are stacked and mutually connected by an intermediate chamber 33. The first pressure chamber 31 is further delimited by a cover 34. The intermediate chamber 33 communicates with the environment via an opening 35, so that the environment pressure prevails in the intermediate chamber 33. The intermediate chamber 33 is delimited by the second diaphragm 26 and the cover 34. The outlet 11 communicates with the pressure chamber 71 via an opening 72.

The cover 34 that delimits the first pressure chamber 31 is provided with a through opening 36 through which the rod 27 moves. Between the rod 27 and the opening 36 a sealing, for example a sealing ring, may be provided. The cover 34 comprises a small opening 79 that allows that a small leak air flow can flow from the first pressure chamber 31 via the openings 35 and 79 to the environment. In use, the first pressure chamber 31 is set under pilot pressure, i.e. a pilot pressure is fed to the first pressure chamber 31. The small leak air flow is advantageous to avoid a hysteresis when a change of pilot pressure is required. Thereby, a fast pressure control is ensured. In case no pilot pressure is fed to the first pressure chamber 31, for example in idle times, the pressure in the first pressure chamber 31 will eventually equal the environment pressure.

This leak air flow also flows through the second pressure regulator 3 (see fig. 1), which offers the advantage that the second pressure regulator 3 by this leak air flow is less sensitive to so-called hysteresis. In the context of this invention "hysteresis" means that the pilot pressure to the pilot controlled first pressure regulator 2 remains almost constant in case of a certain change of position of the stepper motor of the second pressure regulator 3, both if this stepper motor moves toward a certain position with a movement in the one direction and with a movement in the opposite direction. Hysteresis may arise because of the friction and the deformations in case of absence of an airflow through the second pressure regulator 3. Because of the leak air flow the pilot pressure can decrease when desired.

The rod 27 also comprises an axial air duct 37 that allows that compressed air flows between the first pressure chamber 31 and the second pressure chamber 32. The air duct 37 ends with openings 28. The leak air flow also flows through the duct 13, the pressure chamber 32, the axial air duct 37 with opening 28 and the pressure chamber 31. The air duct 37 offers the advantage that the pilot pressure can be supplied as well to the first pressure chamber 31 as to the second pressure chamber 32 via only one duct 13. If no seal is provided between the rod 27 and the opening 36 the function of the opening 79 may be replaced by providing a limited play defined beforehand between the rod 27 and the opening 36.

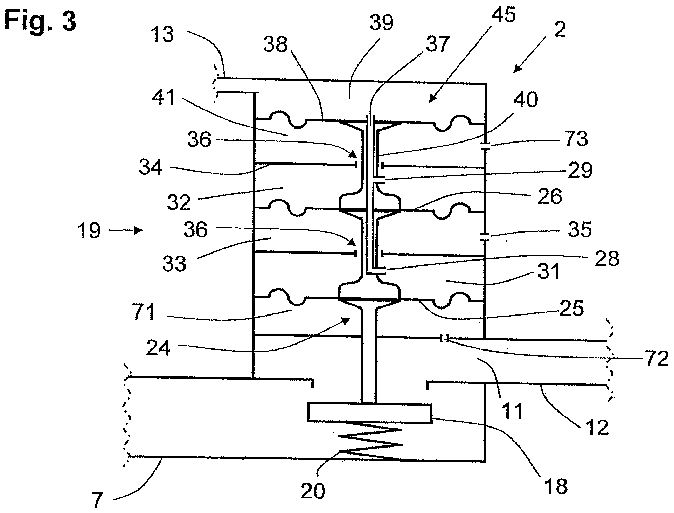

Fig. 3 shows a first pressure regulator 2 with a diaphragm actuator 24 alike to fig. 2. The diaphragm actuator 24 of the first pressure regulator 2 shown in fig. 3 comprises next to the first diaphragm 25 and a first second diaphragm 26 as shown in fig. 2, also an additional or second second diaphragm 38 loaded by the pilot pressure that is provided in a stacked arrangement. The additional or second second diaphragm 38 is arranged in a corresponding third pressure chamber 39 and the load applied to the additional or second second diaphragm 38 is transmitted to the first second diaphragm 26 via a rod 40 in a way similar as the rod 27 shown in fig. 2 can provide in a force transmission between the second diaphragm 26 and the first diaphragm 25 in fig. 2. Also an intermediate chamber 41 is provided between the pressure chambers 32 and 39. The intermediate chamber 41 is alike to the intermediate chamber 33 and may also be provided with an opening 73 to the environment alike to the opening 35. The fluid at pilot pressure is fed to the third pressure chamber 39 via the duct 13. The rod 40 comprises an axial air duct 37 with a first aperture 28 ending in the second pressure chamber 31 and with a second opening 29 ending in the second pressure chamber 32. According to still another variant, more than three diaphragms with a corresponding pressure chamber for pilot pressure may be provided in a stacked arrangement, with for example corresponding intermediate chambers between adjacent pressure chambers for pilot pressure and corresponding rods.

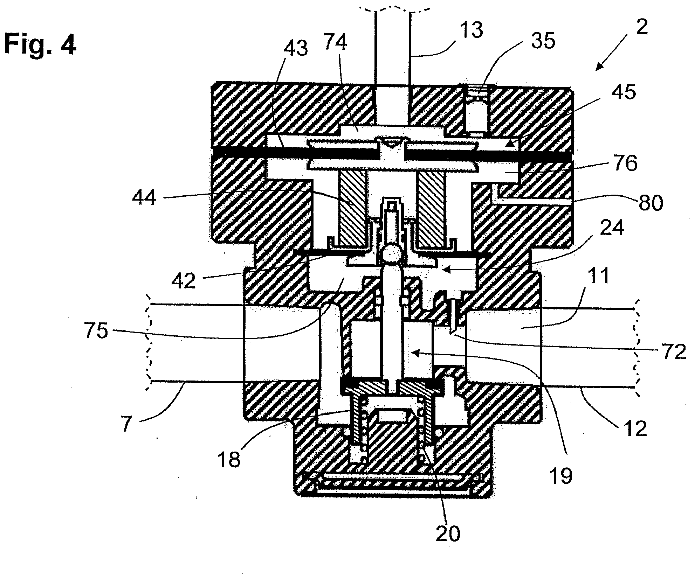

As shown in fig. 4, an embodiment not covered by the claims of a first pressure regulator 2 with a diaphragm actuator 24 is shown that comprises a first diaphragm 43 loaded by the pilot pressure via the duct 13 and a third diaphragm 42 loaded by the output pressure via the opening 72, wherein the effective surface of a third diaphragm 42 is substantially smaller than the effective surface of the first diaphragm 43. The pilot pressure is present in the pressure chamber 74 delimited by the first diaphragm 43, while the output pressure is present in the pressure chamber 75. The third diaphragm 42 and the first diaphragm 43 are in this embodiment coupled by a rod 44, for example a ring shaped rod 44, and move conjointly, wherein the load of the pilot pressure acting on the first diaphragm 43 is balanced by the load of the output pressure acting on the third diaphragm 42. Hence, the output pressure for balancing the pilot pressure is substantially higher than the pilot pressure. An opening 35 for a leak airflow is provided in the pressure chamber 74 under pilot pressure. By providing an opening 80 the intermediate chamber 76 between the first and the third diaphragm 42, 43 can be kept at environment pressure.

A diaphragm actuator 24 as shown in figs. 2 to 4 forms in any case a force enlarging device 45, so that a load exerted by the pilot pressure on the diaphragm actuator 24 is enlarged or amplified. The force enlarging device 45 forms in this case an integral component of the compact diaphragm actuator 24. By applying a force enlarging device 45 a load by the pilot pressure exerted on the diaphragm actuator 24 is enlarged, so that a desired output pressure can be set by a pilot pressure that is chosen lower than the output pressure or chosen lower than the minimally expected value of the feed pressure of the compressed air source 5 (shown in fig. 1).

The load by the pilot pressure is in this case balanced by the load by the output pressure and the force element 20. The force enlarging device 45 allows a relative high output pressure with a pilot pressure which is relatively low and is independent from the feed pressure coming from a compressed air source 5. A force enlarging device 45 allows to set an output pressure which is as high as the feed pressure, so that the feed pressure can be used fully for inserting weft threads.

In the embodiment of figs. 1 to 3 the diaphragms 25, 26, 38 are formed by a dividing element that forms a moveable dividing wall for compressed air between two chambers. The diaphragms 25, 26, 38 comprise in this embodiment a bellows-like element of which the edges are clamped. In the embodiment of fig. 4, the diaphragms 42, 43 are formed by a plate-like element, preferable a relatively elastic plate-like element, such as a membrane. The diaphragms 42, 43 form a moveable dividing wall between two chambers and their edges are clamped.

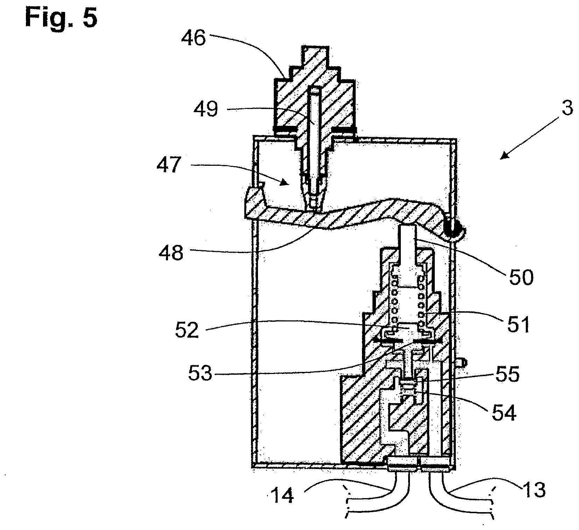

Fig. 5 shows an embodiment of a second pressure regulator 3. The second pressure regulator 3 shown in fig. 5 for regulating the pilot pressure is a motor controlled pressure regulator. The second pressure regulator 3 comprises a motor 46, for example a stepper motor, and a transmission mechanism 47 with a lever 48 for a transmission of a movement of a motor shaft 49 of the motor 46 to a setting element 50 of the second pressure regulator 3. In an embodiment the motor shaft 49 does not perform a turning movement but a linear axial movement when driving the motor 46. The force applied by the lever 48 on the setting element 50 defines the preload of the spring 51 which acts on the diaphragm actuator 52. The diaphragm 53 of the second pressure regulator 3 is loaded on one hand by the spring 51 and on the other hand by the pilot pressure supplied to the first pressure regulator 2 via the duct 13 and a force element 54 to move the valve element 55 of the second pressure regulator 3. Such a pressure regulator 3 is known from US 4,627,459.

Compressed air is supplied to the second pressure regulator via duct 14. To the second pressure regulator 3 compressed air may be supplied at a lower pressure than the feed pressure, for example from the third pressure regulator 4. If this lower pressure is chosen low enough below the feed pressure, for example at 4 bar in case of a feed pressure of 5,5 bar, the second pressure regulator 3 is not submitted to undesired variations in the feed pressure, so that a precise regulating of the pilot controlled first pressure regulator 2 becomes possible easily.

According to an embodiment, at a calibration of the air supply system 1, for example during an assembly of the air supply system 1, factors which influence the pilot pressure undesirably are eliminated, such as dimension tolerances of amongst others the lever 48, the spring 51, the setting element 50 or the force element 54 of the second pressure regulator 3. The simplifies the providing of an open loop control unit 21 for the output pressure of the first pressure regulator 2 without a feedback control for the output pressure of the first pressure regulator 2.

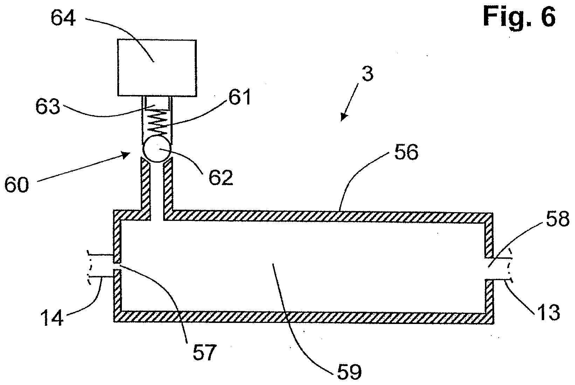

In fig. 6 an embodiment of the second pressure regulator 3 is shown having a housing 56 with an inlet 57 allowing to throttle compressed air, an outlet 58 to a duct 13 to the first pressure regulator 2 shown in figs. 1 to 4 and an air volume 59 there between, wherein a loaded pressure relief valve 60 is provided on the housing 56, which pressure relief valve 60 is loaded by a settable force. According to this embodiment, air is fed to the air volume 59 of the housing 56 via the inlet 57. As the inlet 57 is small, there is a pressure decrease due to a throttling effect. If the pressure in the air volume 59 reaches a preset value, then the pressure relief valve 60, for example a ball valve with a spring element 61 and a ball 62, opens and air can escape until the pressure is decreased to the preset value and the pressure relief valve 60 closes again. Preferably, the spring element 61 of the pressure relief valve 60 is loaded using a plunger 63, which is controlled manually and/or by a motor 64. The motor 64 can be controlled by the control unit 21 shown in fig. 1. The motor 64 of the second pressure regulator 3 is operable to provide a set pressure to be subsequently used as pilot pressure accurately. The inlet 57 is connected to the duct 14, as shown in fig. 1. Due to the throttling at the small inlet 57 in this embodiment a third pressure regulator 4 is not necessarily needed, as for example is shown in fig. 1 and the inlet 57 may be connected directly with the feed line 7 as shown in fig 1. According to a variant not shown the pressure relief valve comprises a closing element that is driven by a motor formed as an actuator, for example a linear actuator, such as a magnetic or solenoid actuator.

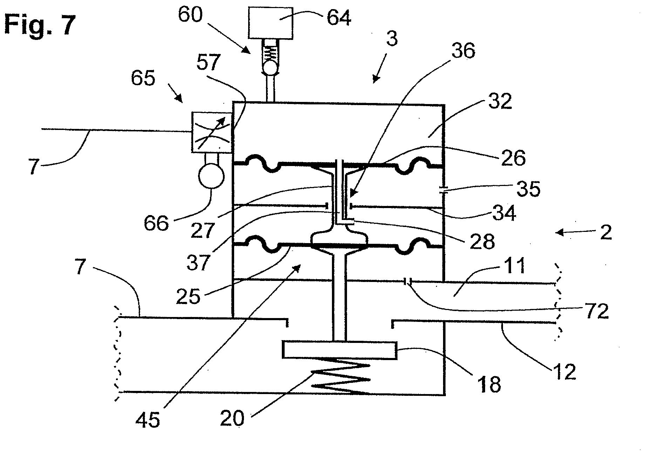

According to a variant shown in fig. 7, the second pressure regulator 3 is provided integrally with a second pressure chamber 32 of the pilot controlled first pressure regulator 2. In this case, the second pressure regulator 3 is integrated in a top of a second pressure chamber 32 of the pilot controlled first pressure regulator 2, in other words arranged directly above the second diaphragm 26 of the pilot controlled first pressure regulator 2. In this embodiment, a throttling valve 65 is provided at the inlet 57 of the second pressure regulator 3, which is directly connected to the feed line 7. According to a variant not shown, the inlet 57 may as well be connected to the duct 14 as shown in fig. 1. The throttling valve 65 allows to set suitably the throttling at the inlet 57. The throttling gap of the throttle valve 65 is set by a motor 66, in particular a stepper motor or any other actuator such as an electromagnetic actuator, so that a sufficient airflow flows through the throttling valve 65 in order to allow to increase or decrease the pilot pressure. In this embodiment the pilot pressure in the pressure chamber 32 at the outlet 58 is set by controlling the motor 64 of the pressure relief valve 60 in a way as described for fig. 6. The second pressure chamber 32 has the same function as the air volume 59 as described in fig. 6.

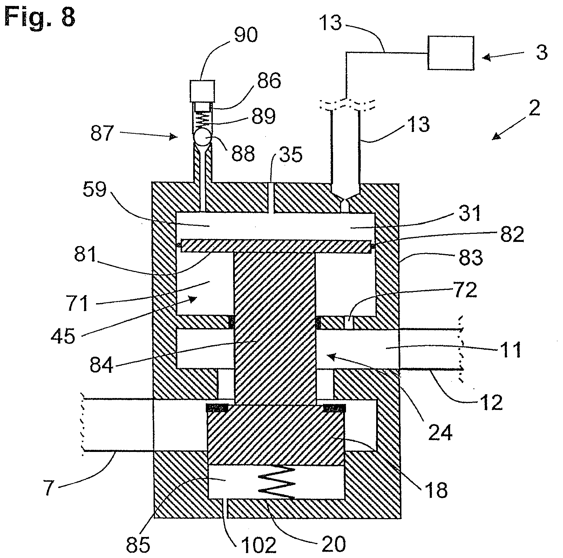

In fig. 8 an embodiment not covered by the claims of a first pressure regulator 2 is shown having a diaphragm actuator 24 comprising a diaphragm 81 that is loaded by the output pressure via the opening 72 and by the pilot pressure via the duct 13. The diaphragm 81 is a dividing element with a moveable dividing wall for compressed air between a first pressure chamber 31 under pilot pressure and pressure chamber 71 under output pressure. The diaphragm 81 is in this case a disc or plate-like element that is provided at its edges with a sealing 82 and that may be moved up and down in the housing 83. The diaphragm 81 is connected to the valve element 18 via a rod 84, wherein the valve element 18 is moveable in a cavity 85 which is connected with the environment via an opening 102. The first pressure chamber 31 is fed via a duct 13 with a pilot pressure from a second pressure regulator 3, so that the pilot pressure prevails in the first pressure chamber 31. The pressure chamber 31 comprises an opening 35 to allow a leak air flow through the pressure chamber 31. The first pressure chamber 31 is also provided with a manually settable pressure relief valve 87. This pressure relief valve 87 comprises a plunger 86, a closing element 88, a spring element 89 and a setting button 90. The pressure relief valve 87 is for example set to a maximal pressure allowed in the pressure chamber 31, for example to a pressure of 3,8 bar if in normal conditions the pilot pressure is allowed to vary between 2,5 bar and 3,5 bar. This offers the advantage that when the pilot pressure would force the valve element 18 into fully open condition, the pressure prevailing in the pressure chamber 31 never can become higher than the set maximal value, even if the pilot pressure from the second pressure regulator 3 would be higher. As the effective surface of the diaphragm 81 under pilot pressure is larger than the effective surface of the diaphragm 81 under output pressure, the diaphragm acts as a force enlarging device 45..

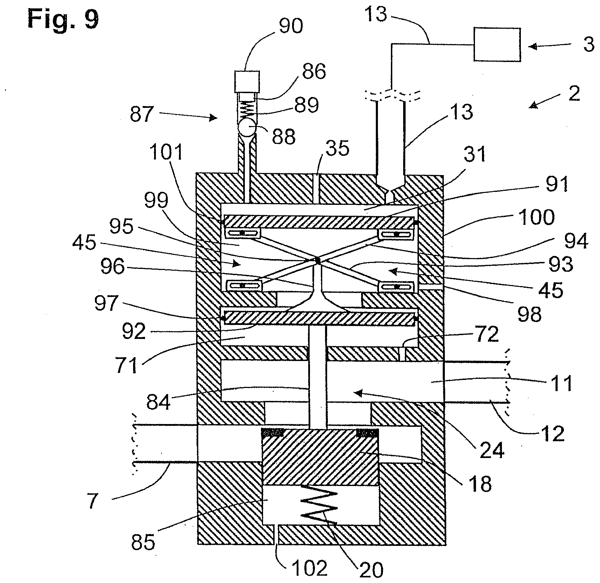

In fig. 9 a variant not covered by the claims is given of the pilot controlled pressure regulator 2 as shown in fig. 8 wherein the force enlarging device 45 comprises a couple of levers 93, 94, a hinge element 95 and a connecting part 96. The diaphragm 91 forms a dividing element for compressed air between the pressure chambers 31 and 99 and is in this case, comparable to the diaphragm 81 from fig. 8, moveable up and down in the housing 100. The diaphragm 91 is provided with a sealing 101 at its edges and is loaded by the pilot pressure via the duct 13 and by the environment pressure via the opening 98. The levers 93 and 94 are hinged connected to each other by the hinge element 95 and are slidably hinged connected to the diaphragm 91 and to the housing 100. The connecting part 96 is connected to the hinge element 95 and to the diaphragm 92 so that by an up and down movement of the diaphragm 91 the connecting part 96 is moved up and down and provides in a transmission of the load by the pilot pressure on the diaphragm 91 to the diaphragm 92. The diaphragm 92 is provided with a sealing 97 at its edges and is loaded by the output pressure via the opening 72 and by the environment pressure via the opening 98. The load by the output pressure on the diaphragm 92 is balanced by the load by the pilot pressure on the diaphragm 91 enlarged by the force enlarging device 45. The rod 84 is connected to the diaphragm 92 for moving the valve element 18. In this way a force enlarging device 45 is conceived wherein the diaphragm 91 is always making a larger movement than the diaphragm 92, so that with a pilot pressure lower than the output pressure the valve element 18 always may be brought in fully opened position.

Embodiments of methods for supplying compressed air to a blowing device 10 of an airjet weaving machine with an air supply system 1 comprising a pilot controlled first pressure regulator 2 as shown in fig. 1 will be explained hereafter in detail.

In case the airflow through the first pressure regulator 2 and/or the output pressure at the outlet 11 of the first pressure regulator 2 changes, the valve element 18 of the first pressure regulator 2 is moved until the output pressure at the outlet 11 of the first pressure regulator 2 reaches again a desired value.

In this case the pilot pressure is also adjusted in function of the weaving conditions. In this case, an adjustment to the weaving conditions is carried out using the second pressure regulator 3 that determines the pilot pressure.

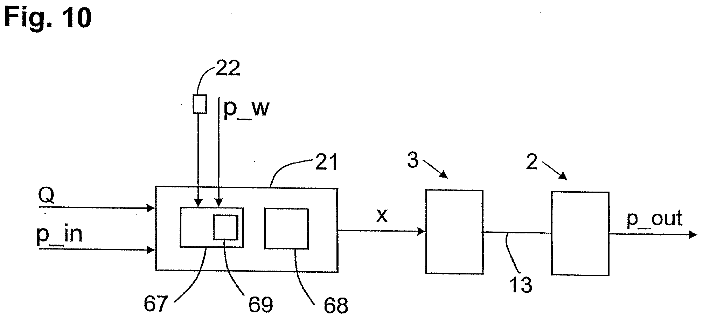

Fig. 10 shows a schematic view of a control for the air supply system 1 of figure 1 using an open-loop control unit 21 according to the invention. The control unit 21 comprises a setting device 67 for setting a desired output pressure in dependence of the weaving conditions, such as weft thread properties, the weaving speed, the weaving pattern, measurement values for a weft thread insertion, such as an average value for an arrival moment of a weft thread at a thread detector 22 and other parameters. In order to obtain that an arrival moment of a weft thread lies within predefined limits, it is advantageous to regulate the output pressure at the first pressure regulator 2. As long as an arrival moment is within the predefined limits, an exact knowledge of the output pressure at the first pressure regulator 2 or of the feed pressure of the compressed air source 5 is irrelevant for regulating the open-loop controlled output pressure. The setting device 67 can according to a variant be an external setting device which is connected by wire or wirelessly for data communication with the control unit 21, in particular with the open-loop control unit 21. In this case weaving conditions are determined and a desired output pressure is matched to the weaving conditions.

If weft threads arrive too late at a thread detector 22 the control unit 21 controls a control parameter for the pilot pressure for the pilot controlled first pressure regulator 2 so that this pilot pressure increases and in this way the output pressure of the pilot controlled first pressure regulator 2 increases, while if weft threads arrive too early at a thread detector 22 the control unit 21 controls a control parameter for the pilot pressure for the pilot controlled first pressure regulator 2 so that this pilot pressure decreases and in this way the output pressure decreases. According to another possibility, for example, in case a bobbin change is detected, the pilot pressure for the pilot controlled first pressure regulator 2 can be increased temporarily in order to avoid the influence of an expected slow weft thread coming from the beginning of the bobbin.

In order to be able to apply an open-loop control, prior to the start of the weaving machine, thus prior to the weaving a calibration of the air supply system 1 is carried out. At calibrating a number of values are determined for an output pressure in dependence of a number of feed pressures, a number of airflows and/or a number of control variables to the first pressure regulator 2. These values are stored as calibration data. The calibration data is used for determining a control variable to the first pressure regulator 2 in dependence of the measured feed pressure and/or a determined airflow, so that a desired output pressure is achieved.

This means that, at the calibrating, data is collected for an output pressure in dependence of a number of control variables, also named control parameters or input parameters, to the first pressure regulator 2, for a number of airflows through the first pressure regulator 2 and/or for a number of feed pressures to the first pressure regulator 2. These measurements are referred to as calibration and the collected data is referred to as calibration data. Using the calibration data it is in return possible to determine a control variable for a measured feed pressure, a determined airflow, and a desired output pressure.

To collect such calibration data for a certain type of first pressure regulator 2 together with a certain type of second pressure regulator 3 in a lab for example following measurements are done. For different positions of for example the stepper motor of the second pressure regulator 3, different flows of air through the first pressure regulator 2 and different feed pressures of the compressed air source 5, the output pressure at the first pressure regulator 2 is determined. This may be done each time for a number of first pressure regulators 2 of a certain construction and a number of second pressure regulators 3 of a certain construction.

The open-loop control unit 21 comprises a storage element 68 in which the collected calibration data is stored. Also a mathematical model for those calibration data may be stored and used by an operator unit 69, which for example defines average values for each type of pressure regulator. When using an individual first pressure regulator 2 and an individual second pressure regulator 3, in a certain weaving machine a number of the abovementioned measurements may be repeated to bring the influence of individual tolerances, such as for example dimension tolerances, into account. For example additional measurements by at least two output pressures, one flow and one feed pressure are carried out to apply individual corrections based on the mathematical model via the operator unit 69 to for example the average values of the mathematical model for the actually used first pressure regulator 2 and the actually used second pressure regulator 3. Those additional measurements may be done at the manufacturer, at the assembly of the weaving machine, or at a weaving machine in the weaving mill.

The open-loop control unit 21 is arranged for regulating a control variable x of the first pressure regulator 2, for example in dependence of a measured feed pressure p_in, a determined airflow Q, a desired output pressure p_w and/or signals of a thread detector 22 and the calibration data stored in the storage element 68. The calibration data allows an efficient open-loop control for controlling an output pressure p_out in case no unexpected disturbances occur, such as defects in a feed line 7 upstream of the first pressure regulator 2 or in the duct 12 downstream of the first pressure regulator 2. The storage element 68 may be an integral part of the open-loop control unit 21. In other embodiments, an external storage element is provided which is connected with the open-loop control unit 21 by wire or wirelessly for data communication. The actual output pressure p_out is in this case not supplied to the control unit 21.

The control unit 21 preferably cooperates with a pressure sensor 15 for measuring the feed pressure p_in in the feed line 7 upstream of the first pressure regulator 2. For example, the control unit 21 also cooperates with an apparatus 30 for determining and/or calculating an airflow Q through the first pressure regulator 2. The control unit 21 can adjust the output pressure p_out of the first pressure regulator 2 when the feed pressure p_in changes or when the feed pressure p_in drops below a boundary value for this feed pressure p_in that is for example related to a desired output pressure p_w of the first pressure regulator 2. The output pressure p_out mainly corresponds to the pressure in the buffer airtank 8. In this way the first pressure regulator 2 also allows to compensate random variations in the feed pressure of the compressed air source 5.

The control unit 21 uses calibration data to determine a control variable x for adjusting the first pressure regulator 2 in dependence of the measured feed pressure p_in in the feed line 7, the determined airflow Q through the feed line 7, the desired output pressure p_w and the calibration data, so that at an outlet 11 of the first pressure regulator 2 an actual output pressure p_out is achieved equal to a desired output pressure p_w. A control variable for the motor controlled second pressure regulator 3 is adjusted in dependence of amongst others the above parameters. By considering the airflow Q through the first pressure regulator 2 with an apparatus 30 for determining an airflow, every unwanted decrease of an output pressure p_out due to an increased airflow Q can easily be avoided.

The open-loop control unit 21 is arranged for determining of a control variable x for adjusting the first pressure regulator 2 in dependence of the measured feed pressure p_in, the airflow Q through the pressure regulator 2 and the desired output pressure p_w. In the embodiment shown, the control variable x is a control command to a motor 46, 64, 66 of the second pressure regulator 3. The control of the motor 46, 64, 66 allows to set the position of the motor 46, 64, 66 and also to set the pilot pressure to the first pressure regulator 2. In the embodiment shown the pilot pressure is mainly influenced by suitably controlling the motor 46 or 64, more particularly by controlling the motor to a defined position.

The setting device 67 for example also comprises a relational operator unit 69 for comparing a measured feed pressure p_in with the set desired output pressure p_w and for detecting a decrease of the feed pressure p_in below a minimal value for the set desired output pressure p_w. The setting device 67 is arranged to adapt a method for controlling the desired output pressure p_w of the air supply system 1 if a decrease of the feed pressure p_in below a minimal value for the desired output pressure p_w is detected, so that the pilot pressure for the desired output pressure p_w at the first pressure regulator 2 is no longer adapted or is adapted only between limits. This increases a stability of the air supply system 1. The minimal value for the desired output pressure p_w may be defined as the minimal value of the measured feed pressure p_in during weaving under normal conditions and may be stored.

The air supply system 1 according to the invention with a pressure sensor 15 is particularly suitable to be applied in case the feed pressure of the compressed air source 5 drops below a set value that is function of the desired output pressure at the first pressure regulator 2. Hereby a control variable to the pressure regulator 2 can be adjusted in dependence of the measured feed pressure of the compressed air source 5. If the feed pressure decreases below a certain value, this may be displayed or signalled by a displaying unit of the weaving machine.

A drop of the feed pressure can result in that an inserted weft thread arrives later at a thread detector 22. If the late arrival is due to a too low feed pressure, an increase of the desired output pressure at the pressure regulator 2 to compensate the late arrival is in most cases not possible. In these circumstances a late arrival of the weft thread could be compensated by an increase of the pilot pressure at the first pressure regulator 2. As the low output pressure is due to a too low feed pressure, such an adaptation of the pilot pressure does not result in an increase of the output pressure, as the pilot controlled pressure regulator 2 in this case is already fully open. In this case the feed pressure in the feed line is fully used as the valve element 18 is in full open position. If such an increase of the pilot pressure would be carried out, in case the feed pressure would increase again, the output pressure at the pressure regulator 2 would become undesirable high, which also could lead to weaving errors. Due to this in case of a too low feed pressure, more particularly if the measured feed pressure is dropped below a set feed pressure, the pilot pressure for a desired output pressure is not adapted any more or is only adapted within limits. This means that the pilot pressure for the pilot controlled first pressure regulator 2 is not adapted any more or is only adapted within limits. The motor controlled second pressure regulator 3 is provided for adjusting the pilot pressure for the first pressure regulator 2. A control variable for the motor controlled second pressure regulator 3 is in this case adjusted at least in dependence of the measured feed pressure. In this case it is obtained that when the feed pressure increases subsequently again, the output pressure at the first pressure regulator 2 still approximately corresponds to the weaving conditions.

In a method the first pressure regulator 2 is set to a maximum opening for allowing a maximum flow in order to allow a maximum airflow. This allows to weave as fast as possible. This is also used in case the feed pressure in the feed line 7 is lower than a pre-set minimal value. In this case the pilot pressure is set sufficiently high in order to achieve that the valve element 18 is fully opened independently of the output pressure of the first pressure regulator 2 and independently of the force of the force element 20. This is possible because a force enlarging device 45 for the pilot pressure is present, in other words because this pilot pressure can always increase sufficiently in order to be able to fully open the valve element 18 at any output pressure of the first pressure regulator 2.

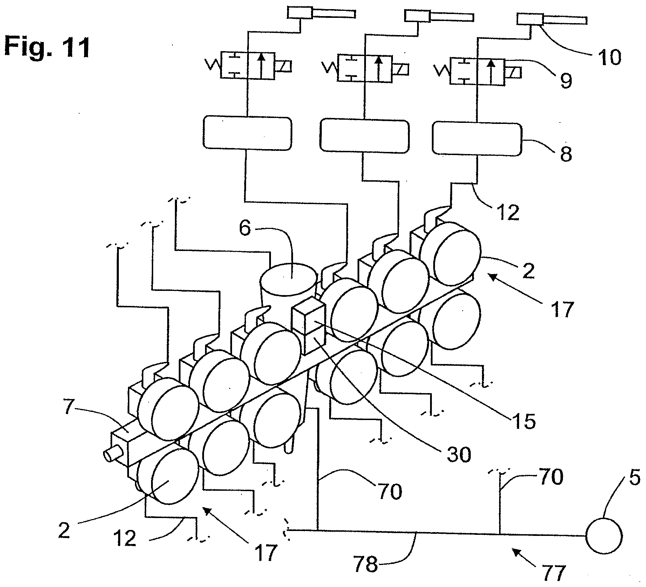

As shown in fig. 11 a group of pressure regulator devices 17 is provided, each of which comprise at least a pilot controlled first pressure regulator 2 to which compressed air is fed at feed pressure via a common feed line 7. The first pressure regulators 2 are arranged adjacent or next to each other and may be at least partially formed as integral components. An arrangement of the pilot controlled pressure regulators 2 of the pressure regulator devices 17 next to one another allows an arrangement that is small in size. Further, the length of feed lines 7 and losses in the feed lines 7 may be reduced due to the small sized pilot controlled first pressure regulators 2. An air filter 6 may be arranged close to the pressure regulator devices 17.

In this embodiment also several buffer airtanks 8 with associated blowing devices 10 are supplied with compressed air from a common compressed air source 5 via respective first pressure regulators 2. In this case one common pressure sensor 15 for measuring the feed pressure upstream of all first pressure regulators 2 is sufficient, instead of several pressure sensors each associated to each buffer airtank 8. Consequently, in preferred embodiments, no pressure sensors are provided at the buffer airtanks 8.

The open-loop control unit 21 as described above allows for example that an operator of weaving machines is able to compare the weaving pressures, this means the pressures at which a weft thread is inserted, of different blowing devices 10 and of different weaving machines easily without using pressure sensors in the various buffer airtanks 8. The different pressures in the pressure regulator devices 17 and/or the pressures in each buffer airtank 8 may be determined by the control unit 21 (shown in fig. 1) using calibration data and may be displayed on a display unit of the weaving machine. Herein the displayed output pressures are equal to the output pressures controlled or desired by the open-loop control unit 21 and approximately equal to the actual output pressures at the pressure regulator 2.

If several weaving machines are coupled to a central control unit that can cooperate with the control unit 21 of each weaving machine, by means of different pressure measurements with a pressure sensor 15 at a feed line 7 of each weaving machine, pressure differences in several supply ducts 70 to a respective weaving machine, which are fed with compressed air from a compressed air source 5 via a distribution system 77 to a respective feed line 7 of a weaving machine can be determined. The feed line 70 is herein connected to the inlet of the air filter 6 arranged upstream of the feed line 7. This allows to determine when the supply pressure in a supply duct 70 to a certain feed line 7 of a weaving machine is different, in particular is substantially lower than to another weaving machine, so that malfunctions in one of the supply ducts 70 or in one of the ducts 78 of the distribution system 77 for compressed air from a compressed air source 5 to one of the several weaving machines can be determined. Since a decrease of the feed pressure also may be caused by an air filter 6 that is dirty, this method is also suitable to define when an air filter 6 is dirty.

According to a variant not shown, the second pressure regulator 3 is as the first pressure regulator 2 executed as a pilot controlled pressure regulator, whereby the pilot controlled second pressure regulator 3 can be smaller in dimension than the pilot controlled first pressure regulator 2.

The apparatus 30 for determining an airflow through the pressure regulator 2 is not limited to the shown airflow measuring device 16 and/or calculating unit 23, but can also be formed by any other device that is capable to determine the amount of air through the pressure regulator 2.

A pilot controlled pressure regulator 2 with a diaphragm actuator 24 can act very fast because the moving parts can be designed lightweight. As the output pressure acts in opposite direction to the pilot pressure on a diaphragm actuator 24 the valve element 18 is moved in response to a load difference between the load by the pilot pressure and the load by the output pressure. By moving of the valve element 18 the valve opening is increasing or decreased. Due to this the regulation is influenced by the load difference and the regulation is almost not influenced by the absolute value of the set pilot pressure. This is advantageous for weaving with a desired speed and weft insertion pattern. A diaphragm actuator 24 with a force enlarging device 45 allows to form a pressure regulator 2 small in size, so that several pressure regulators 2 can be arranged adjacent to each other in a small place.

In the context of the invention, with the term "motor controlled pressure regulator" a pressure regulator is meant which is controlled by a motor, for example by a rotating stepper motor, a linear stepper motor, a controllable DC motor, a servo motor, an electromagnet with a magnet core and/or permanent magnet, an actuator such as a linear actuator, a rotating actuator, a voice coil actuator or a moving spool actuator, or any other motor which is electrically controllable.

The pressure regulators, the pressure regulator devices, the air supply systems and the methods according to the invention are not limited to the embodiments shown and described as example, but may also comprise variants and combinations of these embodiments that fall under the claims.

## Claims

1. Pressure regulator device for an air supply system for an airjet weaving machine comprising a pilot controlled pressure regulator (2) intended for regulating an airflow through the pilot controlled pressure regulator (2) with an actuator (19) and a valve element (18) arranged for reciprocal movement by the actuator (19), wherein the actuator (19) is loaded by a load of the pilot pressure applied against the load of an output pressure, and wherein the actuator (19) is a diaphragm actuator (24) comprising a first diaphragm (25) loaded by the pilot pressure, wherein a setting device (67) for setting the pilot pressure and a force enlarging device (45) for enlarging the load applied by the set pilot pressure on the actuator (19) and for regulating the output pressure to values higher than the values of the set pilot pressure are provided, **characterised in that** at least one second diaphragm (26, 38) loaded by the pilot pressure is provided, wherein the load on the at least one second diaphragm (26, 38) is applied to the first diaphragm (25), and the resulting load on the first diaphragm (25) is balanced by the output pressure.

2. The pressure regulator device according to claim 1, **characterized in that** the pressure regulator device (17) comprises at least a first pressure chamber (31) set under pilot pressure, the at least one first pressure chamber (31) having an opening that allows a leak air flow from the first pressure chamber (31) to the environment.

3. The pressure regulator device according to claim 2, **characterized in that** the first pressure chamber (31) is delimited by the first diaphragm (25).

4. The pressure regulator device according to claim 2 or 3, **characterized in that** at least one second pressure chamber (32, 39) delimited by the at least one second diaphragm (26, 38) is provided, which is connected to the first pressure chamber (31) via an intermediate chamber (33).

5. The pressure regulator device according to claim 4, **characterized in that** the intermediate chamber (33) communicates with the environment.

6. The pressure regulator device according to claim 5, **characterized in that** the intermediate chamber (33) is delimited by the at least one second diaphragm (26) and a cover (34), which cover also delimits the first pressure chamber (31).

7. The pressure regulator device according to any one of claims 1 to 6, **characterized in that** the first diaphragm (25) and the at least one second diaphragm (26) are coupled for a force transmission via a rod (27, 40).

8. The pressure regulator device according to any one of claims 2 to 6, **characterized in that** the first diaphragm (25) and the at least one second diaphragm (26) are coupled for a force transmission via a rod (27, 40) and the pilot pressure is fed to the first pressure chamber (31) via the rod (27, 40).

9. The pressure regulator device according to any one of claims 4 to 6, **characterized in that** the first diaphragm (25) and the at least one second diaphragm (26) are coupled for a force transmission via a rod (27, 40) and the cover (34) delimiting the intermediate chamber (33,41) is provided with a through opening (36) for the rod (27, 40).

10. The pressure regulator device according to claim 9, **characterized in that** the pilot pressure is fed to the first pressure chamber (31) via the rod (27, 40).

11. The pressure regulator device according to any one of claims 4 to 6 or 8 to 10, **characterized in that** the first pressure chamber (31) and the intermediate chamber (33) communicate via an opening (79, 36).

12. The pressure regulator device according to any one of claims 1 to 11, **characterized in that** a force element (20) acts on the valve element (18) in opposition to the pilot pressure.

13. The pressure regulator device according to any one of claim 1 to 12, **characterized in that** the force enlarging device (45) is at least partially an integral component of the actuator (19).

14. Air supply system for an airjet weaving machine comprising at least one blowing device (10) and a compressed air source (5), wherein air from the at least one compressed air source (5) is supplied via the air supply system (1) to the at least one blowing device (10), and wherein the air supply system (1) comprises at least one pressure regulator device (17) having a pilot controlled pressure regulator (2) according to any one of claims 1 to 13 arranged between the at least one compressed air source (5) and a buffer airtank (8) for regulating the pressure in the buffer airtank (8).

15. The air supply system according to claim 14, **characterized in that** a group of pilot controlled pressure regulator devices (17) are provided, which are arranged adjacent to each other.

## Patentansprüche

1. Druckreglervorrichtung für ein Luftzufuhrsystem für eine Luftwebmaschine, umfassend einen pilotgesteuerten Druckregler (2), der dazu bestimmt ist, einen Luftstrom durch den pilotgesteuerten Druckregler (2) zu regeln, mit einem Aktuator (19) und einem Ventilelement (18), das zur Hin- und Herbewegung durch den Aktuator (19) angeordnet ist, wobei der Aktuator (19) belastet ist durch eine Belastung des Pilotdrucks, die gegen die Belastung eines Ausgangsdrucks beaufschlagt ist, und wobei der Aktuator (19) als Membranaktuator (24) ausgebildet ist, der eine durch den Pilotdruck belastete erste Membran (25) umfasst, wobei eine Einstellvorrichtung (67) zum Einstellen des Pilotdrucks und eine Kraftvergrösserungsvorrichtung (45) zum Vergrössern der durch den eingestellten Pilotdruck auf den Aktuator (19) beaufschlagten Belastung und zum Regeln des Ausgangsdrucks auf Werte, die höher sind als die Werte des eingestellten Pilotdrucks, vorgesehen sind, **dadurch gekennzeichnet, dass** mindestens eine zweite durch den Pilotdruck belastete Membran (26, 38) vorgesehen ist, wobei die Belastung auf die mindestens eine zweite Membran (26, 38) auf die erste Membran (25) beaufschlagt wird und die resultierende Belastung auf die erste Membran (25) durch den Ausgangsdruck ausgeglichen wird.

2. Die Druckreglervorrichtung nach Anspruch 1, **dadurch gekennzeichnet, dass** die Druckreglervorrichtung (17) mindestens einen ersten Druckraum (31) umfasst, der unter Pilotdruck eingestellt ist, wobei der mindestens eine erste Druckraum (31) eine Öffnung aufweist, die einen Leckluftstrom vom ersten Druckraum (31) zur Umgebung zulässt.

3. Die Druckreglervorrichtung nach Anspruch 2, **dadurch gekennzeichnet, dass** der erste Druckraum (31) durch die erste Membran (25) begrenzt ist.

4. Die Druckreglervorrichtung nach Anspruch 2 oder 3, **dadurch gekennzeichnet, dass** mindestens ein zweiter Druckraum (32, 39), der durch die mindestens eine zweite Membran (26, 38) begrenzt ist, vorgesehen ist, der mit dem ersten Druckraum (31) über einen Zwischenraum (33) verbunden ist.

5. Die Druckreglervorrichtung nach Anspruch 4, **dadurch gekennzeichnet, dass** der Zwischenraum (33) mit der Umgebung kommuniziert.

6. Die Druckreglervorrichtung nach Anspruch 5, **dadurch gekennzeichnet, dass** der Zwischenraum (33) durch die mindestens eine zweite Membran (26) und eine Abdeckung (34) begrenzt ist, wobei die Abdeckung auch den ersten Druckraum (31) begrenzt.

7. Die Druckreglervorrichtung nach einem der Ansprüche 1 bis 6, **dadurch gekennzeichnet, dass** die erste Membran (25) und die mindestens eine zweite Membran (26) zu einer Kraftübertragung über eine Stange (27, 40) verbunden sind.

8. Die Druckreglervorrichtung nach einem der Ansprüche 2 bis 6, **dadurch gekennzeichnet, dass** die erste Membran (25) und die mindestens eine zweite Membran (26) zu einer Kraftübertragung über eine Stange (27, 40) verbunden sind und der Pilotdruck zum ersten Druckraum (31) über die Stange (27, 40) zugeführt wird.

9. Die Druckreglervorrichtung nach einem der Ansprüche 4 bis 6, **dadurch gekennzeichnet, dass** die erste Membran (25) und die mindestens eine zweite Membran (26) zu einer Kraftübertragung über eine Stange (27, 40) verbunden sind und die den Zwischenraum (33,41) begrenzende Abdeckung (34) mit einer durchlaufenden Öffnung (36) für die Stange (27, 40) versehen ist.

10. Die Druckreglervorrichtung nach Anspruch 9, **dadurch gekennzeichnet, dass** der Pilotdruck zum ersten Druckraum (31) über die Stange (27, 40) zugeführt wird.

11. Die Druckreglervorrichtung nach einem der Ansprüche 4 bis 6 oder 8 bis 10, **dadurch gekennzeichnet, dass** der erste Druckraum (31) und der Zwischenraum (33) über eine Öffnung (79, 36) kommunizieren.

12. Die Druckreglervorrichtung nach einem der Ansprüche 1 bis 11, **dadurch gekennzeichnet, dass** ein Kraftelement (20) auf das Ventilelement (18) gegen den Pilotdruck einwirkt.

13. Die Druckreglervorrichtung nach einem der Ansprüche 1 bis 12, **dadurch gekennzeichnet, dass** die Kraftvergrösserungsvorrichtung (45) mindestens teilweise als integrale Komponente des Aktuators (19) ausgebildet ist.

14. Luftzufuhrsystem für eine Luftwebmaschine, umfassend mindestens eine Gebläsevorrichtung (10) und eine Druckluftquelle (5), wobei Luft aus der mindestens einen Druckluftquelle (5) über das Luftzufuhrsystem (1) zu der mindestens einen Gebläsevorrichtung (10) zugeführt wird, und wobei das Luftzufuhrsystem (1) mindestens eine Druckreglervorrichtung (17) mit einem pilotgesteuerten Druckregler (2) nach einem der Ansprüche 1 bis 13 umfasst, der zwischen der mindestens einen Druckluftquelle (5) und einem Pufferlufttank (8) zum Regeln des Drucks in dem Pufferlufttank (8) angeordnet ist.

15. Das Luftzufuhrsystem nach Anspruch 14, **dadurch gekennzeichnet, dass** eine Gruppe von pilotgesteuerten Druckreglervorrichtungen (17) vorgesehen sind, die nebeneinander angeordnet sind.

## Revendications

1. Dispositif régulateur de pression pour un système d'alimentation en air pour une machine à tisser à jet d'air comprenant un régulateur de pression pilote commandé (2) destiné à réguler un flux d'air à travers le régulateur de pression pilote commandé (2) avec un actionneur (19) et un élément de soupape (18) disposé pour un déplacement en avant et en arrière par l'actionneur (19), dans lequel l'actionneur (19) étant chargé par une charge de la pression pilote appliquée contre la charge d'une pression de sortie, et dans lequel l'actionneur (19) est un actionneur à diaphragme (24) comprenant un premier diaphragme (25) chargé par la pression pilote, dans lequel un dispositif de réglage (67) pour régler la pression pilote et un dispositif élargissant de force (45) pour élargir la charge appliquée par la pression pilote réglée sur l'actionneur (19) et pour réguler la pression de sortie à des valeurs supérieures aux valeurs de la pression pilote réglée sont prévus, **caractérisé en ce qu'**au moins un deuxième diaphragme (26, 38) chargé par la pression pilote est prévu, dans lequel la charge sur l'au moins un deuxième diaphragme (26, 38) est appliquée sur le premier diaphragme (25), et la charge résultante sur le premier diaphragme (25) est équilibrée par la pression de sortie.

2. Le dispositif régulateur de pression selon la revendication 1, **caractérisé en ce que** le dispositif régulateur de pression (17) comprend au moins une première chambre de pression (31) réglée sous pression pilote, l'au moins une première chambre de pression (31) ayant une ouverture permettant une fuite de flux d'air de la première chambre de pression (31) vers l'environnement.

3. Le dispositif régulateur de pression selon la revendication 2, **caractérisé en ce que** la première chambre de pression (31) est délimitée par le premier diaphragme (25).

4. Le dispositif régulateur de pression selon la revendication 2 ou 3, **caractérisé en ce qu'**au moins une deuxième chambre de pression (32, 39) délimitée par l'au moins un deuxième diaphragme (26, 38) est prévue, qui est connecté à la première chambre de pression (31) via une chambre intermédiaire (33).

5. Le dispositif régulateur de pression selon la revendication 4, **caractérisé en ce que** la chambre intermédiaire (33) communique avec l'environnement.

6. Le dispositif régulateur de pression selon la revendication 5, **caractérisé en ce que** la chambre intermédiaire (33) est délimitée par l'au moins un deuxième diaphragme (26) et un couvercle (34), lequel couvercle délimite également la première chambre de pression (31).

7. Le dispositif régulateur de pression selon l'une quelconque des revendications 1 à 6, **caractérisé en ce que** le premier diaphragme (25) et l'au moins un deuxième diaphragme (26) sont reliés pour une transmission de force via une tige (27, 40).

8. Le dispositif régulateur de pression selon l'une quelconque des revendications 2 à 6, **caractérisé en ce que** le premier diaphragme (25) et l'au moins un deuxième diaphragme (26) sont reliés pour une transmission de force via une tige (27, 40) et la pression pilote est fournie à la première chambre de pression (31) via la tige (27, 40).

9. Le dispositif régulateur de pression selon l'une quelconque des revendications 4 à 6, **caractérisé en ce que** le premier diaphragme (25) et l'au moins un deuxième diaphragme (26) sont reliés pour une transmission de force via une tige (27, 40) et le couvercle (34) délimitant la chambre intermédiaire (33, 41) est prévu d'une ouverture traversante (36) pour la tige (27, 40).

10. Le dispositif régulateur de pression selon la revendication 9, **caractérisé en ce que** la pression pilote est fournie à la première chambre de pression (31) via la tige (27, 40).

11. Le dispositif régulateur de pression selon l'une quelconque des revendications 4 à 6 ou 8 à 10, **caractérisé en ce que** la première chambre de pression (31) et la chambre intermédiaire (33) communiquent par une ouverture (79, 36).

12. Le dispositif régulateur de pression selon l'une quelconque des revendications 1 à 11, **caractérisé en ce qu'**un élément de force (20) agit sur l'élément de soupape (18) en opposition à la pression pilote.

13. Le dispositif régulateur de pression selon l'une quelconque des revendications 1 à 12, **caractérisé en ce que** le dispositif élargissant de force (45) est au moins partiellement une composante intégrale de l'actionneur (19).

14. Système d'alimentation en air pour une machine à tisser à jet d'air comprenant au moins un dispositif de soufflage (10) et une source en air comprimé (5), dans lequel l'air d'au moins une source en air comprimé (5) étant alimenté via le système d'alimentation en air (1) à l'au moins un dispositif de soufflage (10), et dans lequel le système d'alimentation en air (1) comprend au moins un dispositif régulateur de pression (17) ayant un régulateur de pression pilote commandé (2) selon l'une quelconque des revendications 1 à 13 disposé entre l'au moins une source en air comprimé (5) et un réservoir en air d'expansion (8) pour réguler la pression dans le réservoir en air d'expansion (8).

15. Le système d'alimentation en air selon la revendication 14, **caractérisé en ce qu'**un groupe de dispositifs régulateur de pression pilote commandé (17) sont prévus, qui sont disposés adjacents l'un à l'autre.
